# EUROPEAN PATENT APPLICATION

(11) **EP 3 012 231 A1**
(43) Date of publication of application: **27.04.2016**
(21) Application number: 14189937.7
(22) Date of filing: 22.10.2014
(51) Int. Cl.: C02F 1/46

(54) **A method for monitoring and treating the water of a swimming pool**

(71) Applicant: Pooltronix SARL, 98000 Monaco (MC)
(72) Inventor: Morrison, Richard, Isle of Wight PO38 2LG (GB)
(74) Representative: Delorme, Nicolas

(57) **Abstract**

The method comprises the steps of:
- controlling the water (2) to detect the size of particles in said water;
- in case the particle size is detected to be above a predetermined threshold, providing at least one treatment signal for triggering a water treating action.

One first treatment signal can cause activation of an electrolysis device (10a) designed to provide copper and/or silver ions, in order to kill microorganisms blooms. One second treatment signal can comprise indicating a backwashing of a sand filter (6) used for treating the water is required.

## Description

The present invention relates to a method for monitoring and treating the water of a swimming pool. The invention further relates to a monitoring and treating system for the water of a swimming pool, for implementing said method.

Several methods and systems are used to maintain the water in a swimming pool in a safe state.

One method consists in introducing hypochlorous acid (HOCI) in the water. This compound can be obtained by hydrolysis of gaseous chlorine, said gaseous chlorine being obtained by electrolysis of the swimming pool water in which salt has been added. This compound acts as an effective disinfecting agent as it can kill most pathogens infections.

This method has several drawbacks.

On the one hand, free chlorine reacts with organic substances, especially with ammonia that is continuously added to the pool water through decomposition of urea in nitrogenous products (urine, sweat, etc.) introduced by the bathers. The chemical compounds resulting from this reaction include chloramines, which are undesirable and therefore needs to be removed from the swimming pool water. Indeed, compared to free chlorine, chloramines are both less effective as a sanitizer and, if not managed correctly, more irritating to the eyes of swimmers. Chloramines are also responsible for the reported "chlorine" smell of swimming pools.

"Free chlorine" means chlorine which can participate in an oxidation reaction and maintain a swimming pool in a safe state. It is the sum of the amounts of HOCI and OCl⁻, and does not include chloramines. Chlorine in the form of chloramines is referred to as"combined chlorine".

On the other hand, several infections are not killed by chlorine. These are amongst others Cryptosporidium parvum, E.coli, Cholera, legionnaires disease and Guardia lamblia. These microorganisms are rare in swimming pools, but when they do appear, there is a legal requirement in public swimming pools - that is where the public are admitted - to completely drain out the water and to scrub walls and pipes with acid. Whilst none of these microorganisms are of life threatening form, the results of inhalation or ingestion are extremely unpleasant.

Another method consists in introducing a combination of copper and silver ions in the water, insofar as it allows killing the above mentioned microorganisms. More specifically, copper is known as being an efficient algaecide and fungicide, while silver is known as an effective bacteria and virus killer.

In the water, copper and silver ions, which have positive charges, bond with negatively charged areas on the microorganism's cell walls, affecting the cell wall permeability and minimising the intake of life-sustaining nutrients. Inside an algae cell, copper and silver attack sulphur-containing amino acid radicals in the proteins used for photosynthesis. Photosynthesis and reproductive processes are blocked, leading to cell lysis (disintegration) and death.

One significant advantage of copper and silver is that they can remain active in water, providing long-term residual, non-toxic protection against recontamination.

However, the main drawback of this method is that it is fairly expensive. Indeed, pools are continuously charged with copper and silver ions, even if it is not necessary, i.e. if the above mentioned microorganisms are not present in water.

Besides, in order to maintain the water in a swimming pool in a safe state, the water is continuously filtered, to remove unwanted particles from the water. After a certain period of time, the filter becomes clogged and cannot operate properly. Cleaning the filter is then necessary, which can be done by backwashing.

Pool staff in public swimming pools, or possibly pool owners, have a routine of backwashing as recommended by the manufacturers, whether the filter requires to be backwashed or not. For example, a backwashing can be carried out systematically once or twice a week. This results in water and energy wastage, as well as waste of time and money.

It is an object of the present invention to provide an improved method for monitoring and treating the water of a swimming pool which can overcome the drawbacks of the prior art.

According to a first aspect, the invention concerns a method for monitoring and treating the water of a swimming pool, comprising the steps of:
- controlling the water to detect the size of particles in said water, if any;
- in case the particle size is detected to be above a predetermined threshold, providing at least one treatment signal for triggering a water treating action.

Thus, owing to the method according to the invention, the water treating action(s) is (are) carried out only when required. The need for said action to be carried out is determined by the monitoring of the water condition, more precisely by controlling the size of particles in the water. Indeed, knowing the particles size makes it possible to determine what kind of particles it is, and therefore what kind of water treating action is required to remove said particles.

In other words, therefore, the water treating action(s) is (are) not carried out continuously, nor on a regular basis, but only when needed. As a result, the invention allows saving considerable time and sums of money to the user.

According to an embodiment, one first treatment signal is designed to cause introduction in the water of copper and/or silver ions, preferably both copper and silver ions. In this case, detecting that the particle size is above a predetermined threshold can automatically lead to triggering the corresponding water treating action.

In practice, said first treatment signal can cause activation of an electrolysis device designed to provide copper and/or silver ions. For example, a control unit can send a first treatment signal to an electrolysis control unit to make it apply a DC potential across the electrolysis device.

Said first treatment signal can be provided if the detected particle size is above a first threshold, said first threshold ranging from 2 to 7 µm, preferably from 2 to 5 µm.

This threshold value makes it possible to detect microorganism blooms, such as Cryptosporidium blooms. Indeed, microorganisms tend to agglomerate for various reasons, among which the flocculent properties of agents in the water.

Preferably, Introduction in the water of copper and/or silver ions can be stopped in case the copper level in water is above 0,7 mg/l, preferably above 0,5 mg/l, or if the silver level in water is above 0,07 mg/l. These levels lead to very satisfactory results in terms of water condition, and therefore introducing more copper or silver ions would generate unnecessary additional costs. Moreover, it is not desirable to have higher levels of copper and silver ions. On the one hand, too many copper ions in the water has a detrimental effect on the grouting of the pool and human hair. On the other hand, whilst it is not a health problem to have excess quantities in the water, the silver can react with the chlorine in the water and produce a silver chloride which in turn neutralises the chlorine and makes it ineffective

According to another embodiment, one second treatment signal comprises indicating a backwashing of a sand filter used for treating the water is required.

In practice, said second treatment signal can be designed to be perceived by a person: for example, it can be a visible and/or audible signal. In this case, triggering the water treating action corresponding to the detected particle size can be made manually by the operator. Alternatively, it could be envisaged to automatically trigger the filter backwashing.

It has to be noted that the terms "first" and "second" when referring to the water treating actions do not indicate a specific order in which the actions have to be carried out. These terms are only employed for better distinguishing the two actions.

Said second treatment signal can be provided if the detected particle size is above a second threshold, said second threshold ranging from 40 to 100 µm.

This threshold value makes it possible to detect sand particles in the water, which means that the filter needs to be cleaned. Therefore, the invention allows a person to backwash the filter only when needed.

The first and second treatment signals can both be provided if the detected particle size is above the first and the second thresholds.

According to a second aspect, the invention relates to a monitoring and treating system for the water of a swimming pool, for implementing the method as previously described. The system comprises:
- a sand filter for filtering the water;
- a detector capable of detecting the size of particles in the water;
- an electrolysis device designed to provide copper and/or silver ions, preferably both copper and silver ions;
- a control unit connected to the detector so as to receive data corresponding to the particle size, and further connected to an electrolysis control unit capable of activating the electrolysis device and to a filter condition indicator capable of indicating a backwashing of the sand filter is required, depending on the detected particle size.

The system can further comprise one or several electrolysis device(s) designed to provide gaseous chlorine as a precursor of a disinfecting agent by the electrolysis of salted water. The chlorine electrolysis device(s) and the copper/silver electrolysis device are preferable operated independently, two distinct electrolysis control units being provided in the system.

The detector can comprise a transmitter, such as a photoelectric cell, capable of emitting a signal across the water, such as a laser beam, and a sensor capable of receiving the signal after it has passed through the water. For example, the transmitter and sensor can be arranged on both sides of a pipe carrying the swimming pool water, such as a supply tube carrying a sample of said water. The detector therefore makes it possible to detect the presence of particles, the number of particles, and the size of the particles.

The system can further comprise means for measuring the copper level in water, said means being connected to the control unit. For example, said means comprise a colorimetric system using a reagent which is a non-oxidizing fluid.

According to an embodiment, the electrolysis device comprises at least two plates electrically connected to a power supply unit, each plate comprising copper and/or silver. The plates can be made of various metallic alloys or mixes, provided the electrolysis device can provide the appropriate levels of copper and/or silver ions.

The system can further comprise means for determining the silver level in water, given the measured copper level in water and the amount of silver in the material making up the plates. With this implementation, the silver level is thus determined by calculation, but not directly measured in the water.

According to an embodiment, the electrolysis device comprises at least:
- two end plates, each end plate comprising at least 90% copper, preferably each end plate being made of substantially 100% copper;
- and one intermediate plate, comprising from 5 to 10% silver, for example around 8% silver.

Other implementations could be envisaged, such as a plate comprising a mixture of copper and silver.

Besides, according to an embodiment, the electrolysis device comprises a casing having an inlet and an outlet for the flow of water and containing a stack of plates, the plates being superimposed with two adjacent plates being spaced apart from each other by a non zero distance (d). Moreover, the casing can further comprise at least one support for the plates, each support having a series of substantially parallel grooves, a rib being therefore formed between two adjacent grooves, each groove receiving an edge of one plate, so that the support acts as a protective member for the plates edges.

These and other features and advantages will become apparent upon reading the following description in view of the drawing attached hereto representing, as a non-limiting example, an embodiment of a method and system according to the invention.

The following detailed description of an embodiment of the invention is better understood when read in conjunction with the appended drawings, it being however understood that the invention is not limited to the specific embodiment disclosed.
Figure 1 is a schematic view of a swimming pool and of a monitoring and treating system according to an embodiment of the invention, the system including a sand filter and an electrolysis device for providing copper and silver;
Figure 2 is a perspective view of said electrolysis device of figure 1;
Figure 3 is an enlarged partial perspective view of the electrolysis device of figure 2;
Figures 4a and 4b are schematic views of the sand filter of figure 1, respectively in filtering mode and in backwashing mode;
Figure 5 is a flow chart showing steps of a method for monitoring and treating the water of a swimming pool according to the invention.

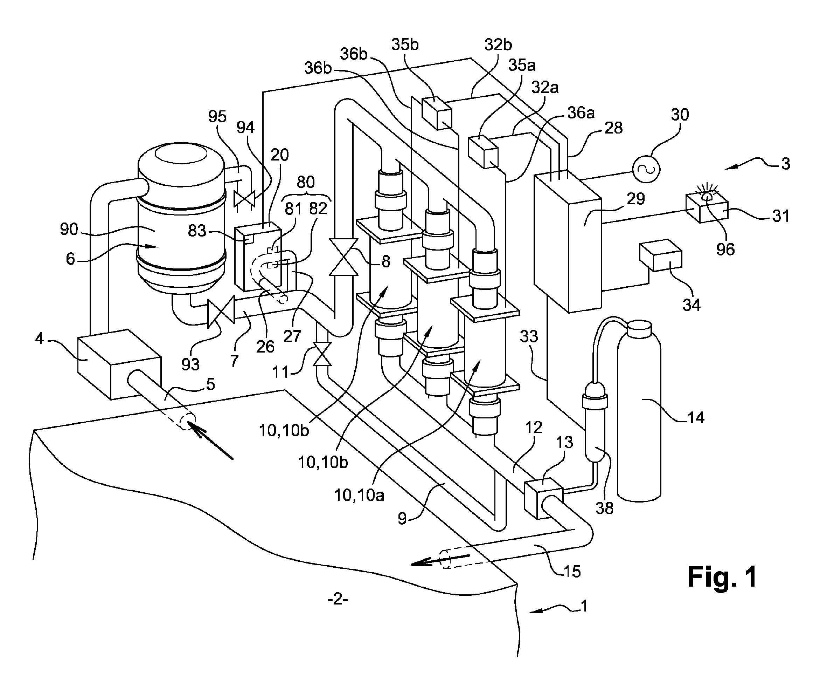

Referring to Figure 1 there is shown a swimming pool 1 containing water 2 which is kept in safe and attractive condition by a monitoring and treating system 3.

When a swimming pool is first filled with tap water, the water is clear and safe to swim in. However, unwanted contaminants can then enter the water. These contaminants include microorganisms introduced by bathers, for example. As said microorganisms quickly multiply in the warm water, they have to be treated to prevent subsequent swimmers from becoming sick. Chlorine is conventionally used to kill microorganisms.

More precisely, chlorine introduced in the water is rapidly hydrolysed to hypochlorous acid (HOCI), which is a strong germicidal compound:

Cl₂ + H₂O → HOCl + Cl⁻ + H⁺.

Hypochlorous acid then dissociates into hydrogen ions and hypochlorite ions as follows: HOCl → H⁺ + OCl⁻.

The monitoring and treating system 3 comprises a circulating pump 4 which pumps the water 2 through pipe 5 into a filtration unit 6 which removes solid particles, amongst others. In the illustrated embodiment, the filtration unit 6 is a sand filter.

The filtered water leaves the filtration unit 6 through a pipe 7 and a valve 8 and passes through one of several electrolysis devices 10 before being introduced into pipe 12. According to the invention, one electrolysis device 10a is designed to provide copper and/or silver ions. In the following description of a possible embodiment, the electrolysis device 10a is designed to provide both copper and silver ions. At least one electrolysis device 10b - for example two electrolysis devices 10b in the illustrated embodiment - is designed to provide gaseous chlorine as a precursor of a disinfecting agent by the electrolysis of water 2 including salt.

In the illustrated embodiment, three electrolysis devices 10 are arranged in parallel between pipe 7 and pipe 12, but this shall not be considered as limitative. A bypass line 9 having a valve 11 is provided so that water can be circulated whilst maintenance is carried out on the electrolysis devices 10. Moreover, there may be provided valves (not shown) to prevent water from flowing through one of the electrolysis devices 10 depending on the needs.

Gaseous carbon dioxide from a cylinder 14 can be introduced into the water flowing in pipe 12 downstream from the electrolysis devices 10, in order to adjust the water pH. This can be achieved by a venturi 13 provided in pipe 12.

Finally, the chlorinated and pH adjusted water is returned through pipe 15 into the swimming pool 1.

The amount of chlorine, copper / silver ions and carbon dioxide which are introduced into the water 2 is requested by a control system which comprises a sensor block 20. In use, a small flow of water 2 is passed through the sensor block 20 via supply tube 26 and returned via return tube 27. The sensor block 20 can typically contain a pH cell, one or more sensors to determine the global concentration of chlorine and/or the free chlorine concentration, and a temperature sensor. The sensor block 20 further comprises a detector 80 capable of detecting the size of particles in the water 2. The detector 80 will be described more precisely in the following.

The signals from the sensor block 20 are sent along line 28, such as a multistrand cable, to a control unit 29. The control unit 29 is connected to a power supply 30, a user interface 31 and a device 34 for Internet access.

Although the sensor block 20 is shown as being distinct from the control unit 29, in an implementation the sensor block 20 can be integrated in the same box as the control unit 29.

A first control line 32a connects the control unit 29 to a first electrolysis control unit 35a that is connected to the copper / silver electrolysis device 10a via electric cables 36a. The first electrolysis control unit 35a is used to apply a DC potential across the electrolysis device 10a.

A second control line 32b - or chlorine control line 32b - connects the control unit 29 to a second electrolysis control unit 35b - or chlorine control unit 35b - that is connected to the chlorine electrolysis devices 10b via electric cables 36b. The chlorine control unit 35b is used to apply a DC potential across the electrolysis devices 10b.

The first and second electrolysis control units 35a, 35b can be arranged in a same box, or can be one and a same unit which is however capable of controlling independently the copper / silver electrolysis device 10a and the chlorine electrolysis devices 10b.

A carbon dioxide control line 33 connects the control unit 29 to a flow cell 38 that is connected to the cylinder 14 containing gaseous carbon dioxide.

As regards chlorine and pH control, the monitoring and treating system 3 is operated as follows.

As the swimming pool is filled the water 2 is dosed with table salt to a concentration of about 3g/l for example. The salt is used in the production of chlorine in the electrolysis devices 10b.

The circulatory pump 4 is activated and the water flows through the filtration unit 6, the electrolysis devices 10, the venturi 13 and returned to the swimming pool 1.

Generally, when the swimming pool 1 has been cleaned and newly filled with fresh tap water, the parameters of the sample of water passing through the block 20 can be: pH ≈ 7.4; free chlorine ≈ 0.1 ppm; chloramines ≈ 0; temperature ≈ 24.7°C.

The optimum pH can be 7.3, which is both comfortable for the bathers and efficient for the chlorine disinfecting action. This optimum pH is preset in the control unit 29. As regards the free chlorine level, it depends on the use of the pool (public or domestic) and on local regulations. Accordingly, the desired chlorine level (2 ppm for example) is entered into the set point input 31.

Dealing firstly with the chlorine, the control unit 29 notes that chlorine is required and sends a signal to the chlorine control unit 35b which applies a DC potential across the electrolysis devices 10b. Salted water is electrolysed in each electrolysis device 10b to form chlorine which enters the water. Moreover, there might be a need to produce more chlorine in case the chloramines level is too high. Indeed, chloramine can be removed from water by treatment with superchlorination (such as 5 ppm or more of free chlorine for example) while maintaining a pH of about 7, whereby hypochlorous acid from the free chlorine strips the ammonia from the chloramine.

Once the water has been properly chlorinated, carbon dioxide is injected into the water to adjust its pH to the desired value of 7.3 before the water is returned to the swimming pool 1.

According to the invention, the detector 80 is capable of detecting the size of particles in the water 2. To that end, the detector 80 typically comprises a transmitter 81 and a sensor 82. For example, the transmitter 81 is a photoelectric cell capable of emitting a laser beam and the sensor 82 is arranged opposite the transmitter 81 so as to receive the laser beam after it has passed through the water 2.

Thus, as particles in the swimming pool water 2 pass through the detector 80, they break the laser beam, this break being measured by the sensor 82. The number of breaks is equal to the number of particles, and the paramters of the signal received by the sensor 82, such as the amplitude, is proportional to the size of the particles. The control unit 29 connected to the detector 80 via line 28 therefore receives data corresponding to the particle size.

Depending on the particle size detected, the control unit 29 is capable of providing at least one treatment signal for triggering an appropriate water treating action.

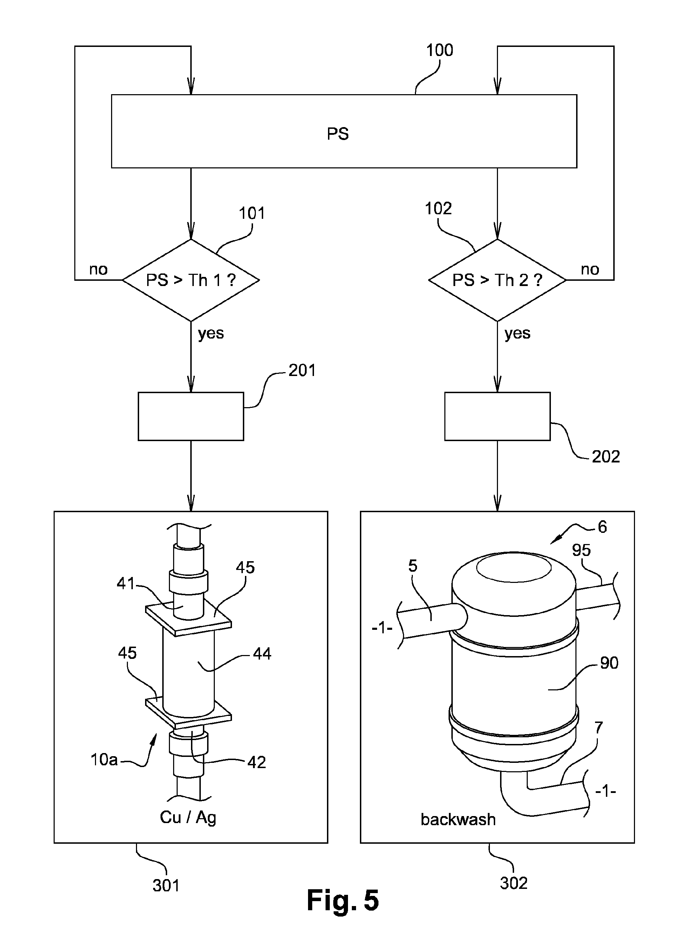

As schematically shown in figure 5, the method for monitoring and treating the water 2 of the swimming pool 1 comprises a preliminary step 100 consisting in controlling the water 2 to detect the particles size (PS) in the water 2 - if such particles are present. This is achieved by means of the detector 80 as previously explained.

Then, in step 101, the control unit 29 determines if the particle size (PS) is above a predetermined first threshold Th1. If so, then the control unit 29 provides one first treatment signal 201 for triggering a first water treating action 301.

Moreover, in step 102 - which can be carried out simultaneously along with step 101 - the control unit 29 determines if the particle size (PS) is above a predetermined second threshold Th2. If so, then the control unit 29 provides one second treatment signal 202 for triggering a second water treating action 302.

Step 101 and subsequent signal 201 and water treating action 301 will now be described more specifically.

The first threshold Th1 aims at indicating that the water 2 contains unwanted microorganisms that have not been killed by chlorine, and thus that another action is required to kill them. More specifically, the first threshold Th1 ranges from 2 to 7 µm, which allows indicating that microorganisms blooms such as Cryptosporidium blooms are present in the water 2.

Consequently, the first treatment signal 201 provided by the control unit 29 is an electric signal towards the first electrolysis control unit 35a, which causes activation of the electrolysis device 10a by the first electrolysis control unit 35a, making copper and silver ions being released in the water 2 to kill said microorganisms.

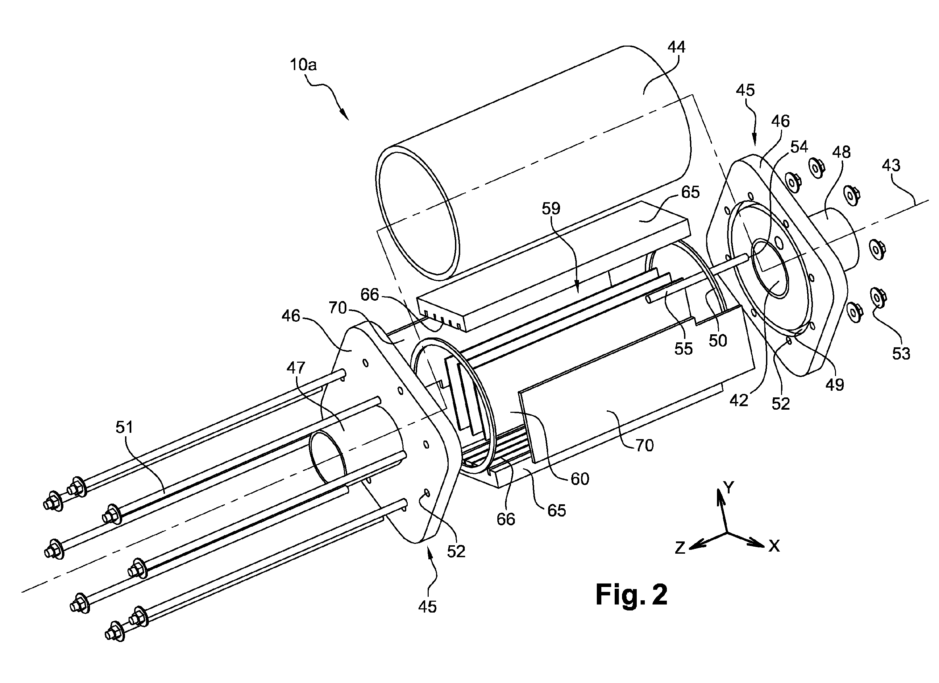

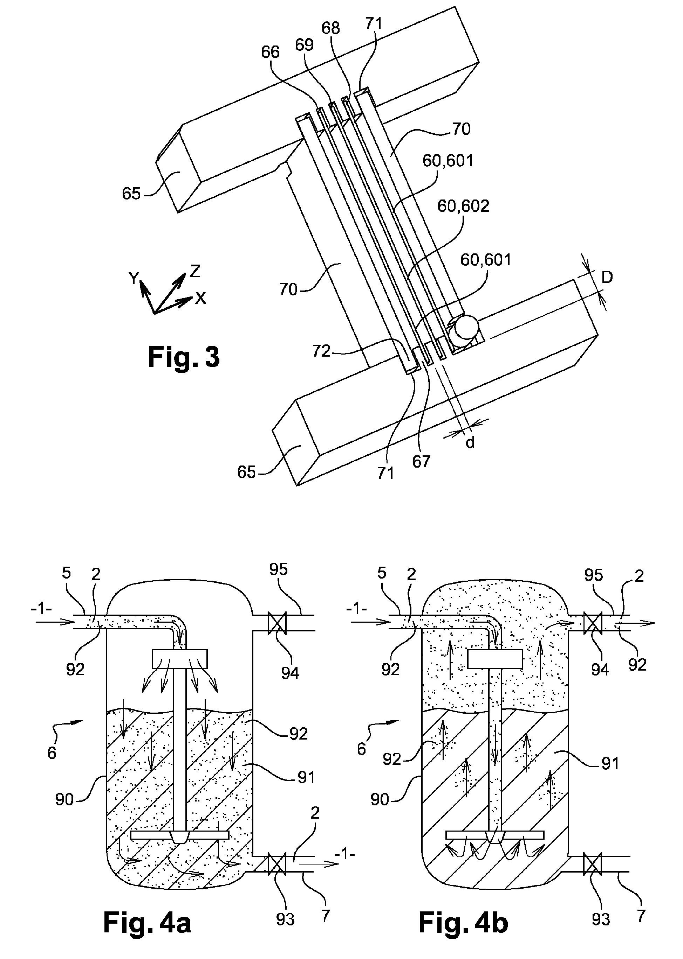

As shown in figures 2 and 3, the electrolysis device 10a comprises a casing 40 having an inlet 41 and an outlet 42 for the flow of water. In the illustrated embodiment, the casing 40 has an axis 43 and comprises a peripheral wall 44 which is substantially cylindrical as well as end covers 45.

As shown in figure 2, longitudinal direction Z is defined as the direction of the casing axis 43. Directions X and Y are directions which are both orthogonal to Z and orthogonal to each other. The term "transverse" is used for elements which are substantially orthogonal to direction Z.

The covers 45 can be substantially identical. One cover 45 comprises a transverse wall 46 which can substantially have the shape of a square, and which comprises a central hole forming the inlet 41, respectively the outlet 42. Inlet 41 and outlet 42 can be substantially circular and their axis can be axis 43. An inlet pipe 47 is connected to the casing inlet 41, and an outlet pipe 48 is connected to the casing outlet 42. Said pipes 47, 48 can be plastic welded to the wall 46.

The cover 45 further comprises a substantially annular channel 49 for receiving the corresponding longitudinal end of the peripheral wall 44, with an annular seal 50 being interposed between the peripheral wall 44 and the cover 45. The covers 45 can be fastened to each other by means of bolts 51 passing through holes 52 arranged in the covers and tightened by nuts 53. The casing 40 can thus be tightly closed under pressure.

Each cover 45 further includes a hole 54 receiving an electrode 55 which is secured in place by a threaded seal and which is connected to the first electrolysis control unit 35a and provides the DC potential.

The casing 40 contains a stack 59 of plates 60. The plates 60, which are substantially identical, have the shape of rectangles arranged parallel to (Y,Z). The plates 60 are superimposed such that their corresponding end faces are substantially coplanar, the stack of plates 59 substantially forming a parallelepiped. The longer edge 68 of each plate 60 is arranged substantially longitudinally and comprises an end face 69 substantially parallel to (X,Z).

Moreover, two adjacent plates 60 are spaced apart from each other by a non zero distance d, which can range from 1,3 to 1,7 mm, preferably from 1,4 to 1,5 mm.

The stack of plates 59 includes two end plates 601 which are electrically connected to the first electrolysis control unit 35a. These end plates 601 form electrodes - i.e. one anode and one cathode. Each end plate 601 comprises at least 90% copper, preferably each end plate 601 being made of substantially 100% copper. Furthermore, the stack of plates 59 includes one intermediate plate 602 - and possibly more than one intermediate plate - located between the end plates 601, the plate 602 being bipolar - i.e. with one face forming an anode and the other face forming a cathode. The intermediate plate 602 comprises from 5 to 10% silver, for example around 8% silver.

The casing 40 further comprises two supports 65 for the plates 60, to secure them in the casing 40 in an appropriate and precise manner. The supports 65, which are substantially identical, have the shape of flat parallelepipeds extending substantially parallel to (X,Z), i.e. perpendicular to the plates 60. The supports 65 substantially have the same longitudinal dimension as the peripheral wall 44. The supports 65 are located on both sides of the stack of plates 59.

On its face turned towards axis 43, i.e. towards the plates 60, each support 65 comprises a series of substantially parallel grooves 66. Each groove 66 extends substantially along Z, substantially along the whole length of the support 65. Each of the plates 60 have one longitudinal edge 68 received in the groove 66 of one support 65, and the other longitudinal edge 68 received in the groove 66 of the opposite support 65. As a result, a rib 67 is formed between two adjacent grooves 66, said rib 67 being located between the edges 68 of two adjacent plates 60. The end face 69 of one plate edge 68 faces the bottom of the groove 66.

The depth D - along direction Y - of the groove receiving a plate edge is greater than 1 cm. Because the plates 60 have their longitudinal edges 68 embedded into the grooves 66, at a sufficient depth D (namely more than 1 cm), any current transfer between the two end plates 601 is prevented, i.e. the transfer of power short-circuiting is prevented. As a result, deterioration of the plates 60 is prevented. More precisely, the rib 67 between two adjacent grooves 66, as well as the grooves 66, act as protective members for the longitudinal edges 68 of the plates 60.

The electrolysis device 10a further comprises two panels 70 which are arranged substantially parallel to the plates 60, on both sides of the stack of plates 59. Each support 65 comprises two slots 71 for receiving an edge of each panel 70. More precisely, each slot 71 extends substantially along Z, substantially along the whole length of the support 65. Each of the panels 70 have one longitudinal edge 72 received in the slot 71 of one support 65, and the other longitudinal edge 72 received in the slot 71 of the opposite support 65.

Thus, as shown in figure 3, the two panels 70 and the two supports 65 form a rectangular housing around the stack of plates 59, said housing maintaining the plates 60 and being tightly secured between the end covers 45.

When a small current (around 4 or 5 V for example) is passed through the electrolysis device 10a, copper and silver ions are released in the water 2.

For the correct disinfection, it is recommended that the appropriate level of copper in the water range from 0.5 to 0.7 mg/l and the appropriate level of silver in the water range from 0.05 to 0.07 mg/l.

On the one hand, as schematically illustrated in figure 1, the system 3 comprises means 83 for measuring the copper level in water, said means being connected to the control unit 29. In practice, these means 83 can be located in the sensor block 20 and include a colorimetric system utilising a reagent to detect the copper in the water 2, this reagent being a non-oxidizing fluid.

On the other hand, it is not possible to test the water for small silver content automatically. Therefore, the silver level in water is not measured but determined, typically by the control unit 29, according to the measured copper level in water 2 and the amount of silver in the material making up the plates 60. Thus, it is important to precisely know the size and content of the intermediate plate 602 in the electrolysis device 10a.

The control unit 29 receives the data corresponding to the copper and silver levels and controls accordingly the first electrolysis control unit 35a which in turn controls the copper / silver electrolysis device 10a. The control unit 29 is designed to cause activation of the electrolysis device 10a, but also to stop said electrolysis device 10a in case the copper level in water is above 0,7 mg/l, preferably above 0,5 mg/l, or if the silver level in water is above 0,07 mg/l.

Even when the electrolysis device 10a is not on, the silver and copper ions keep disinfecting for months. This is one of the greatest benefits of copper and silver, insofar as they remain active in water, providing long-term residual, non-toxic protection against recontamination. They remain in water until they flocculate, or form masses with algae and bacteria and then become large enough to be removed by filtration.

During the ionisation process hydrogen cations are created, which increases the water pH. This coagulates the impurities dissolved into the water 2. Oxygen bubbles make them float, so these coagulated impurities get into the filtration unit 6, so there is no need for flocculent agents in the water 2.

Step 102 and subsequent signal 202 and water treating action 302 will now be described more specifically.

The second threshold Th2 aims at indicating that the filtration unit 6 needs backwashing.

As shown in figures 4a and 4b, the filtration unit 6 comprises a container 90 containing a sand bed 91 which can trap undesirable particles 92. In normal mode (figure 4a), water 2 coming from the swimming pool 1 enters the container 90 by pipe 5 and, passes through the sand bed 91 in which undesirable particles 92 remain trapped, and then flows through pipe 7 towards the swimming pool 1.

In backwash mode (figure 4b), water 2 coming from the swimming pool 1 enters the container 90 by pipe 5 according to a direction that is opposite the water flow in normal mode, resulting in undesirable particles 92 being carried by the water flow out of the sand bed 91. A valve 93 arranged on pipe 7 is closed, but a valve 94 arranged on a sewer pipe 95 is opened, so that water carrying the particles 92 out of the sand bed 91 is evacuated.

Copper and silver ions form amounts of chloride sulphide molecules that becomes trapped in the sand bed 91 present in the filtration unit 6, becoming part of yet another disinfection layer. Most of the ions released in the process keep floating in the water 2, keeping it clean from the different undesirable live forms present.

The second threshold Th2 ranges from 40 to 100 µm, which allows indicating that the sand filter 6 needs to be cleaned and can be backwashed. Indeed, when the sand filter 6 is full, small particles of sand and debris - which have larger dimensions than the microorganisms or microorganisms blooms - pass through the detector 80.

As a result, the control unit 29 provides the second treatment signal 202 indicating a backwashing of the sand filter 6 is required. In practice, the second treatment signal 202 can result in a red light 96 flashing on the user interface 31, said light being a filter condition indicator, as schematically shown in figure 1.

The operator thereby knows that a backwashing - as the second water treating action 302 - is necessary and can carry it out manually.

The invention makes it possible to identify in the flow of water both sand particles and blooms of the above mentioned microorganisms by means of the detection of the size of the particles, and, consequently, to send an appropriate signal depending on the detected size.

As a result, the invention allows maintaining the water in a safe state at lower cost, insofar as the appropriate water treating actions (i.e. introduction of Cu / Ag ions and/or filter backwash) are not carried out on a regular basis, but only when needed.

The invention is of course not limited to the embodiment described above as an example, but encompasses all technical equivalents and alternatives of the means described as well as combinations thereof.

## Claims

1. A method for monitoring and treating the water (2) of a swimming pool (1), comprising the steps of:
- controlling the water (2) to detect the size of particles (PS) in said water (2), if any;
- in case the particle size (PS) is detected to be above a predetermined threshold (Th1, Th2), providing at least one treatment signal (201, 202) for triggering a water treating action (301, 302).

2. The method according to claim 1, **characterized in that** one first treatment signal (201) is designed to cause introduction in the water (2) of copper and/ or silver ions, preferably both copper and silver ions.

3. The method according to claim 2, **characterized in that** said first treatment signal (201) causes activation of an electrolysis device (10a) designed to provide copper and/or silver ions.

4. The method according to claim 2 or claim 3, **characterized in that** said first treatment signal (201) is provided if the detected particle size (PS) is above a first threshold (Th1), said first threshold (Th1) ranging from 2 to 7 µm.

5. The method according to any one of claims 2 to 4, **characterized in that** introduction in the water (2) of copper and/or silver ions is stopped in case the copper level in water is above 0,7 mg/l or if the silver level in water is above 0,07 mg/l.

6. The method according to any one of claims 1 to 5, **characterized in that** one second treatment signal (202) comprises indicating a backwashing of a sand filter (6) used for treating the water (2) is required.

7. The method according to claim 6, **characterized in that** said second treatment signal (202) is provided if the detected particle size (PS) is above a second threshold (Th2), said second threshold (Th2) ranging from 40 to 100 µm.

8. The method according to any one the preceding claims, when depending on claims 4 and 7, **characterized in that** the first and second treatment signals (201, 202) are both provided if the detected particle size (PS) is above the first and the second thresholds (Th1, Th2).

9. A monitoring and treating system for the water (2) of a swimming pool (1), for implementing the method of any one of the preceding claims, **characterized in that** it comprises:
- a sand filter (6) for filtering the water (2);
- a detector (80) capable of detecting the size of particles (PS) in the water (2);
- an electrolysis device (10a) designed to provide copper and/or silver ions, preferably both copper and silver ions;
- a control unit (29) connected to the detector (80) so as to receive data corresponding to the particle size (PS), and further connected to an electrolysis control unit (35a) capable of activating the electrolysis device (10a) and to a filter condition indicator (96) capable of indicating a backwashing of the sand filter (6) is required, depending on the detected particle size (PS).

10. The system according to claim 9, **characterized in that** the detector (80) comprises a transmitter (81), such as a photoelectric cell, capable of emitting a signal across the water (2), such as a laser beam, and a sensor (82) capable of receiving the signal after it has passed through the water (2).

11. The system according to claim 9 or claim 10, **characterized in that** it further comprises means (83) for measuring the copper level in water (2), said means (83) being connected to the control unit (29).

12. The system according to any one of claims 9 to 11, **characterized in that** the electrolysis device (10a) comprises at least two plates (60, 601, 602) electrically connected to a power supply unit (35a), each plate comprising copper and/or silver.

13. The system according to claims 11 and 12, **characterized in that** it further comprises means for determining the silver level in water (2), given the measured copper level in water (2) and the amount of silver in the material making up the plates (60).

14. The system according to any one of claims 9 to 13, **characterized in that** the electrolysis device (10a) comprises at least:
- two end plates (60, 601), each end plate comprising at least 90% copper, preferably each end plate being made of substantially 100% copper;
- and one intermediate plate (60, 602), comprising from 5 to 10% silver, for example around 8% silver.

15. The system according to any one of claims 12 to 14, **characterized in that** the electrolysis device (10a) comprises a casing (44) having an inlet (41) and an outlet (42) for the flow of water (2) and containing a stack of plates (59), the plates (60, 601, 602) being superimposed with two adjacent plates being spaced apart from each other by a non zero distance (d), and **in that** the casing (44) further comprises at least one support (65) for the plates (60), each support (65) having a series of substantially parallel grooves (66), a rib (67) being therefore formed between two adjacent grooves (66), each groove (66)receiving an edge (68) of one plate (60), so that the support (65) acts as a protective member for the plates edges (68).
